Europäisches Patentamt

(19) European Patent Office

Office européen des brevets

(11) Publication number: **0 048 717**
**B1**

(12) **EUROPEAN PATENT SPECIFICATION**

(45) Date of publication of patent specification: **08.01.86**

(21) Application number: **81900463.1**

(22) Date of filing: **28.03.80**

(86) International application number:
**PCT/US80/00382**

(87) International publication number:
**WO 81/02709 01.10.81 Gazette 81/23**

(51) Int. Cl.⁴: **B 62 D 21/12,** B 62 D 47/00 //
A61G5/00

(54) **COLLAPSIBLE FOUR WHEEL SELF-POWERED VEHICLE.**

(43) Date of publication of application:
**07.04.82 Bulletin 82/14**

(45) Publication of the grant of the patent:
**08.01.86 Bulletin 86/02**

(84) Designated Contracting States:
**AT CH DE FR GB LU NL SE**

(56) References cited:
**US-A- 834 424**
**US-A- 987 157**
**US-A-1 429 213**
**US-A-3 322 224**
**US-A-3 770 073**
**US-A-3 896 891**
**US-A-3 897 857**
**US-A-4 026 568**

(73) Proprietor: **ENIX, Wilma**
**1500 Brandon Road**
**Joliet, IL 60436 (US)**

(72) Inventor: **ENIX, Clarence**
**1500 Brandon Road**
**Joliet, IL 60436 (US)**

(74) Representative: **Williams, John Francis**
**J.F. Williams & Co 34 Tavistock Street**
**London WC2E 7PB (GB)**

Courier Press, Leamington Spa, England.

## Description

This invention relates to the field of self-powered land vehicles of relatively small size for personal use both indoors and outdoors, and for carrying on a boat, motor home or the like as an auxiliary vehicle after docking at a pier or parking at a campsite.

Previous land vehicles of this type have included two wheeled motor bikes and so-called "mopeds", powered by internal combustion motors. Two wheel vehicles have the disadvantage of being less stable than a four wheeled vehicle, making it difficult to use for going to a store from dockside or a campsite and returning with several sacks of groceries and provisions. Internal combustion motors also require highly flammable fuel which adds to the danger of fire and explosion when carried as an auxiliary vehicle aboard a boat or a motor home.

Personal size electric powered wheel chairs are also known. However, they are usually essentially nothing more than a wheel chair of the hospital type for use by patients or invalids to which an electric motor has been connected. They are intended for use primarily indoors, or only on paved surfaces such as sidewalks when used outdoors. They are not intended for overland travel, nor for travel on a roadway, nor are they suitable for such purpose. Among other things, the front wheels of such wheel chair type conveyances are much smaller in diameter than the rear wheels. Also, when electric motors are mounted on a hospital type or invalid type of wheel chair, the use of a direct drive mechanism such as a chain or belt drive has to be avoided or complicated uncoupling mechanism is required, so the electric motor may be disengaged from the wheels to enable turning by hand when desired or necessary. Moving the wheel chair up or down over curbs is an example of when turning the wheels by hand may be necessary.

U.S. Patent Specification No. 3896891 provides a motorised wheel chair which can split into five component parts comprising two side units, a seat unit, a back unit and a base unit. These are connected together by pin and slot and saddle connections. This motorised wheel chair suffers from disadvantages inherent in wheel chairs and does not provide a vehicle suitable for general use both indoors and outdoors.

The present invention seeks to provide a collapsible four wheel self-powered vehicle for indoor and outdoor use.

According to the invention, there is provided a self-powered vehicle, including a frame assembly which may be manually assembled and disassembled, a first frame sub-assembly, a second frame sub-assembly manually connectable to and manually disconnectable from the first frame sub-assembly, a plurality of wheels for the vehicle, at least one of said wheels being part of the first frame sub-assembly and at least one of the wheels being part of the second frame sub-assembly, lateral connecting members between the first and second sub-assemblies, said lateral connecting members including respective first ends and second ends, characterised in that each of the lateral connecting members is pivotally and non-detachably connected to their first ends to one of the first and second frame sub-assemblies and rigidly and detachably connected to the other of said frame sub-assemblies, at their second ends including non-detachable connecting means to non-detachably connect the first ends of the lateral connecting members to the said first and second frame sub-assemblies and latch means to connect and detachably lock the second ends of the lateral connecting members to the said other of the frame sub-assembly, whereby each of the first and second frame sub-assemblies are locked in fixed spaced apart relationship when so connected and prevented from movement toward or away from each other.

The invention will be described in greater detail, by way of example, with reference to the drawings, in which:—

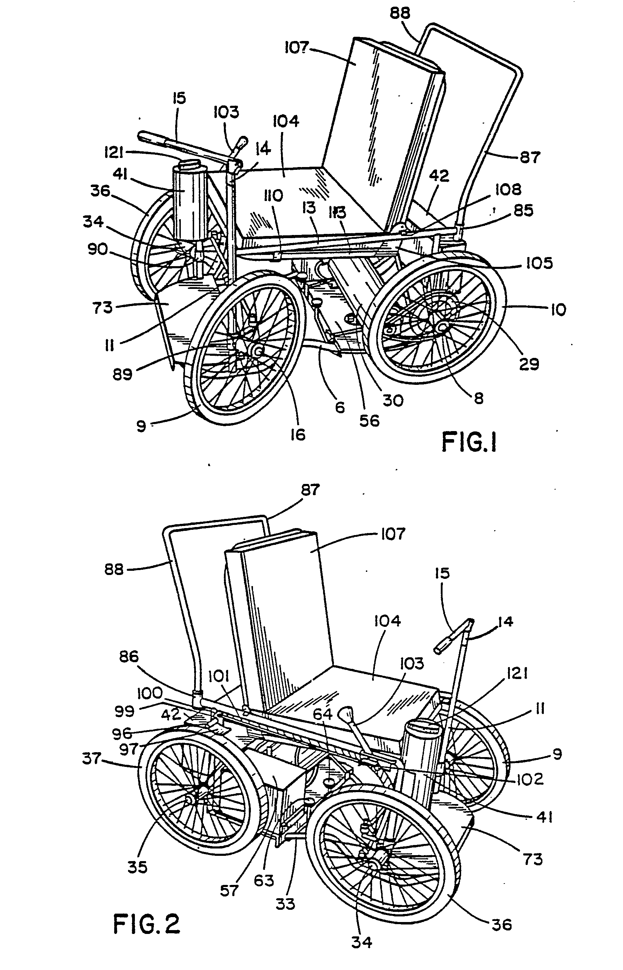

Figure 1 is a perspective view of one side of a self-powered vehicle in accordance with this invention;

Figure 2 is a perspective view of the opposite side of the self-powered vehicle shown in Figure 1;

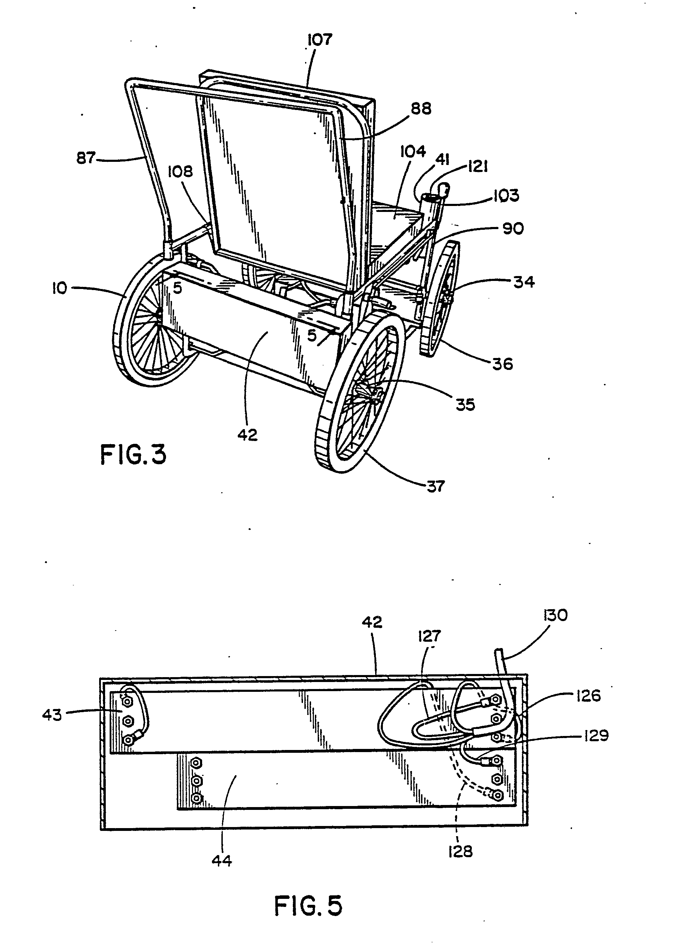

Figure 3 is a perspective view from the rear of the self-powered vehicle shown in Figure 1;

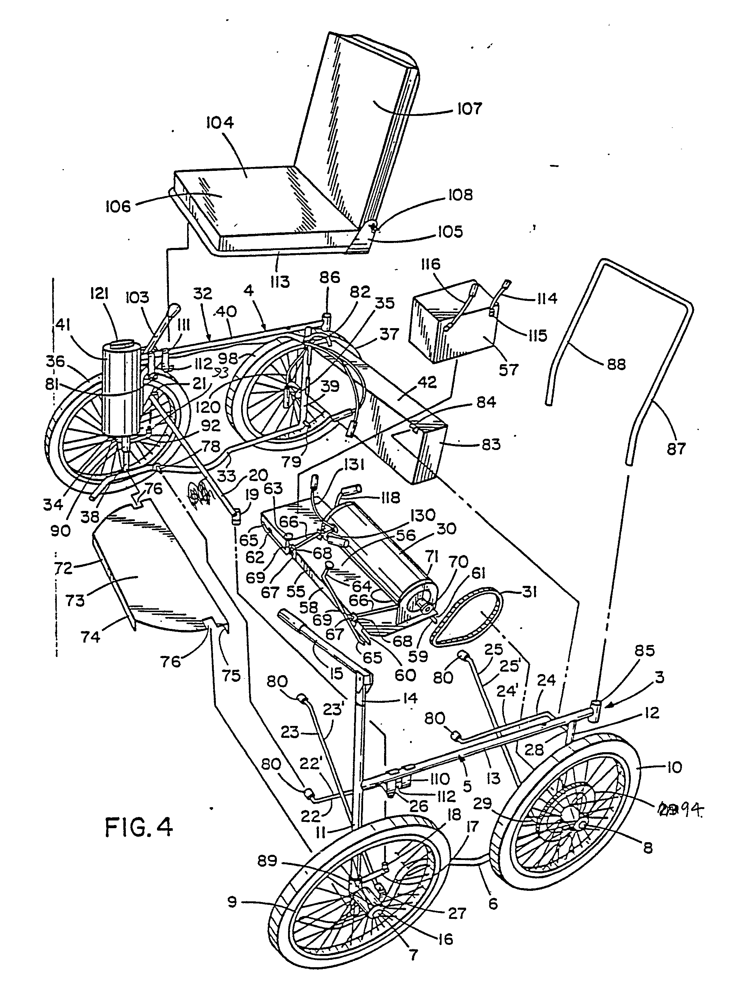

Figure 4 is an exploded view of the self-powered vehicle shown in Figure 1;

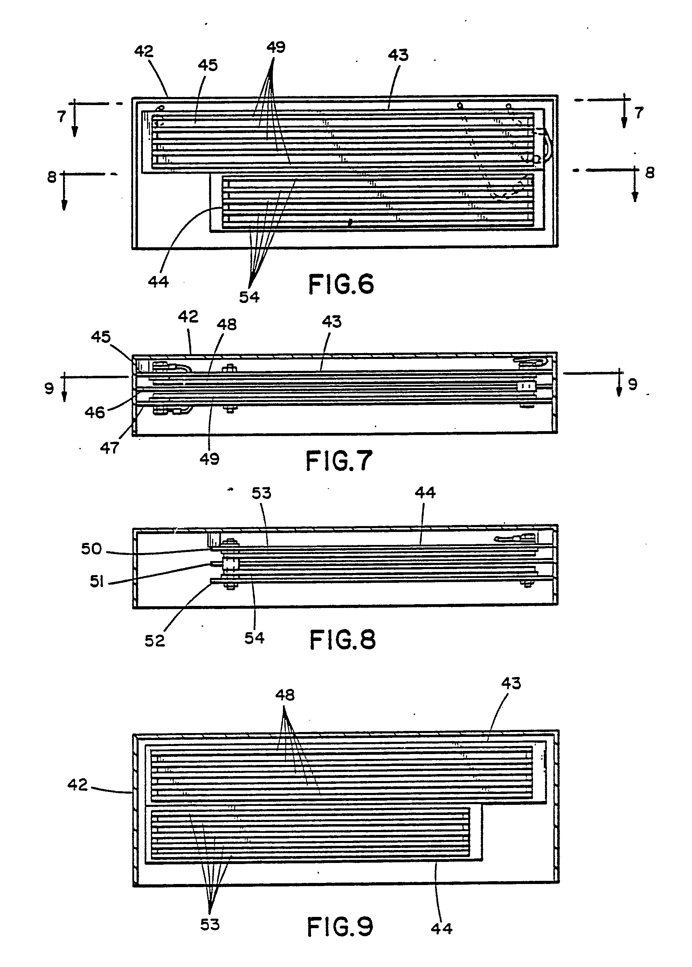

Figure 5 is a front elevation view of the resistance bank assembly used in the self-powered vehicle in accordance with this invention;

Figure 6 is a front elevation view of the resistance bank assembly shown in Figure 5 with the front cover plate removed;

Figure 7 is a top plan view of the resistance bank assembly taken on line 7—7 of Figure 6;

Figure 8 is a top plan view of the lower half portion of the resistance bank assembly taken on line 8—8 of Figure 6;

Figure 9 is a rear elevation view of the resistance bank assembly as seen when taken on line 9—9 of Figure 7; and

Figure 10 is a schematic drawing of the electric circuitry of a self-powered vehicle in accordance with this invention.

A collapsible four wheel self-powered vehicle in accordance with this invention is designated generally by the reference number 1.

A collapsible chassis frame assembly 2 includes a first frame sub-assembly 3 which may be quickly disconnected from a second frame sub-assembly 4.

Frame sub-assembly 3 includes a side frame 5 comprising a lower longitudinal frame member 6 extending between front axle 7 and rear axle 8 on which the front wheel 9 and rear wheel 10 of first frame sub-assembly 3 are respectively mounted; an upright frame member 11 extending upwardly from a front portion of frame member 6 at substantially a right angle; an upright frame member 12 extending upwardly from a rear portion of frame member 6 at substantially a right angle; and an upper longitudinal frame member 13 extending between upright frame members 11 and 12.

Upright frame member 11 is tubular and includes a steering shaft 14 rotatably mounted therein, and a steering handle 15 pivotally mounted at the upper end of steering shaft 14. Front axle 7 is mounted to pivot about upright frame member 11 to enable steering of front wheel 9 whose hub 16 is mounted on front axle 7.

A steering arm 17 is also mounted for pivotal movement about upright tubular frame member 11 by rotation of steering shaft 14 which is connected at its lower end to the steering arm 17. An upwardly projecting lug 18 extends from the free end of steering arm 17 for connection thereto of compression connector 19 at one end of a tie rod 20. Tie rod 20 includes a second compression connector 21 at its opposite end for connection to a corresponding lug on the steering arm which steers the opposite front wheel.

Frame sub-assembly 3 also includes two pairs of lateral connecting members, including lateral connecting members 22 and 23 in the front pair and lateral connecting members 24 and 25 in the rear pair. Lateral connecting member 22 is pivotally secured to pivot assembly 26 affixed to a front portion of upper longitudinal frame member 13. Lateral connecting member 23 is pivotally secured to pivot assembly 27 affixed to a front portion of lower longitudinal frame member 6. Lateral connecting member 24 is pivotally secured to pivot assembly 28 affixed to a rear portion of upper longitudinal frame member 13. Lateral connecting member 25 is pivotally secured to pivot assembly 29 affixed to a rear portion of lower longitudinal frame member 6.

The pivot axes of the pivot assemblies 26 to 29 are vertical when the vehicle is upright, the frame sub-assemblies 3 and 4 lying in a plane substantially parallel to the pivot axes.

Each lateral connecting members 22—25 includes an elongated diagonally extending portion 22'—25' respectively, whereby the lateral connecting members 22 and 24 secured at one end to pivot assemblies affixed to the upper longitudinal frame member 13 are positioned for connection of their opposite ends to the corresponding lower longitudinal frame member of frame sub-assembly 4. Similarly, lateral connecting member 23 and 25 secured at one end to pivot assemblies affixed to the lower longitudinal frame member 6 are positioned for connection of their opposite ends to the corresponding upper longitudinal frame member of frame sub-assembly 4.

Rear wheel 10 of frame sub-assembly 3 includes a sprocket 94 for connection to the electric motor 30 by means of a drive chain 31 when the vehicle has been assembled.

Frame sub-assembly 4 includes a side frame 32 comprising a lower longitudinal frame member 33 extending between front axle 34 and rear axle 35 on which the front wheel 36 and rear wheel 37 of the second frame assembly half 4 are respectively mounted; an upright frame member 38 extending upwardly from a front portion of frame member 33 at substantially a right angle; an upright frame member 39 extending upwardly from a rear portion of frame member 33 at substantially a right angle; and an upper longitudinal frame member 40 extending between upright frame members 38 and 39.

A rotary tap switch 41 is mounted on upright frame member 38. A resistance bank assembly 42 is pivotally mounted on upright frame member 39.

Resistance bank assembly 42 includes two resistance bank members 43 and 44. Resistance bank member 43 includes three spaced apart fiberglass electrically insulating panels 45, 46 and 47, having five resistance elements 48 sandwiched between fiberglass panels 45 and 46 and five resistance elements 49 sandwiched between panels 46 and 47.

Resistance bank member 44 similarly includes three spaced apart electrically insulating fiberglass panels 50, 51 and 52, having five resistance elements 53 sandwiched between fiberglass panels 50 and 51 and five resistance elements 54 sandwiched between fiberglass panels 51 and 52.

The resistance elements 48, 49, 53 and 54 may consist of welding rods. The resistance elements 48 and 49 in the embodiment of the invention described herein are twenty-three inches long. The resistance elements 53 and 54 are nineteen inches long.

The resistance bank member 43 and resistance elements 48 and 49 mounted thereon are inserted into the electrical circuit to drive the electric motor 30 in one direction, such as reverse. The resistance bank member 44 and resistance elements 53 and 54 mounted thereon are inserted into the electrical circuit to drive the electric motor 30 in the opposite direction, such as forward.

A rear base member 55 is detachably mounted between lower longitudinal frame members 6 and 33. The base member 55 includes a flat mounting surface 56 on which the electric motor 30 and battery 57 are mounted, and depending flanges 58 and 59 which extend downwardly from each opposite longitudinal edge of base member 55.

Each flange 58 and 59 include longitudinally extending slots 60 and 61 which open at the edge of base member 55 facing lower longitudinal frame member 6, to receive frame member 6 therein when attaching base member 55 during assembly of the vehicle. Each flange 58 and 59 also include vertically extending slots 62 which open at the bottom free edge of flanges 58 and 59 to receive the facing portions of lower longitudinal frame member 33 of frame sub-assembly 4 therein to complete the seating of base member 55 on the frame assembly. A pair of locking levers 63 and 64 are pivotally mounted on flange 58, having free end portions 65 which extend across the openings of the slots 60 and 62 when pivoted to the locking position thereby retaining lower frame member 33 in slot 62 until the locking levers are pivoted to the unlocking position.

Adjusting rods 66 are attached at one end to the electric motor 30 and at the other end 67 they project through apertures in projecting tabs 68 extending upwardly from flange 58. The ends 67 of adjusting rods 66 are threaded, and nuts 69 are provided for threading thereon to hold adjusting rods 66 in place against projecting tabs 68 at the desired location of motor 30. When the nuts 69 are removed, or moved nearer to the free ends 67 of rods 66, the motor 30 may be moved rearwardly toward rear wheel 10 and sprocket 29. In such position, the drive chain 31 may be attached to the drive gear 70 attached to the drive shaft 71 of electric motor 30 and to the sprocket 29. When the chain 31 is placed on sprocket 29 and drive gear 70, the motor 30 may be moved forwardly with adjusting rods 66 extending farther through the apertures in projecting tabs 68 until the drive chain 31 is tightened. The nuts 69 may then be tightened against projecting tabs 68 to hold the adjusting rods 66 and the motor 30 in the desired position relative to the sprocket 29 of rear wheel 10.

The battery 57 is mounted on the base member 55 adjacent to the electric motor 30.

A front base member 72 is detachably mounted at the front of the vehicle frame assembly between upright frame member 11 of frame sub-assembly 3 and upright frame member 38 of frame sub-assembly 4. Front base member 72 includes a flat surface portion opposite longitudinal edges of front base member 72. Slots 76 are provided in the flat surface portion 73 opening to opposite side edges thereof to receive upright frame member 11 of frame sub-assembly 3 in one of said slots at one side of front base member 72 and to receive frame member 38 of frame sub-assembly 4 in the other of said slots at the opposite side of front base member 72. Vertical slots 77 are provided in depending flange 75, at spaced apart locations to receive respective facing portions of lower longitudinal members 6 (of frame assembly half 3) and 33 (of frame assembly half 4) therein, when front base member 72 is attached during assembly of vehicle frame assembly of this invention.

·The rear base member 55 and the front base member 72 thus hold the bottom portions of the frame sub-assemblies 3 and 4 securely in place when assembled as described. The front base member 72 serves as a foot rest for the driver and passenger of the vehicle.

The lower longitudinal member 33 of frame sub-assembly 4 includes a pair of connecting lugs 78 and 79, at spaced apart ends of lateral connecting members 22 and 24 pivotally mounted to frame assembly half 3 as described above. The free end portions of lateral connecting members 22 and 24 include coupling members 80 of conventional design, having recesses therein to receive respective connection lugs 78 and 79 to hold said lugs therein until released.

The upper longitudinal frame member 40 of frame sub-assembly 4 also includes a similar pair of connecting lugs 81 and 82 mounted therein at spaced apart locations and positioned for registration with the corresponding ends of lateral connecting members 23 and 25 pivotally mounted to frame sub-assembly 3 as described above. The free end portions of lateral connecting members 23 and 25 also include coupling members 80 of conventional design, having recesses therein to receive respective connecting lugs 81 and 82 and to hold said lugs therein until released.

The lateral connecting members 22—25 pivotally secured to frame sub-assembly 3, when connected to connecting lugs 78, 79, 81 and 82 respectively, hold both the upper and lower portions of the frame sub-assemblies 3 and 4 securely in place.

The resistance bank assembly 42 includes a housing 83 which extends between upright frame member 39 of frame sub-assembly 4 (on which it is pivotally mounted) and upright frame member 12 of frame sub-assembly 3 when the vehicle frame assembly is completely assembled. A hook 84 is provided along the upper edge of housing 83 near the end thereof adjacent upright frame member 12 when in assembled position, for hooking over the facing portion of cross-member 24. The resistance bank assembly is thus held securely in place when assembly is completed.

The upper longitudinal frame members 13 (of frame sub-assembly 3) and 40 (of frame sub-assembly 4) include sockets 85 and 86 respectively secured at their rearward ends. A reinforcing U-shaped bar member having legs 87 and 88 is provided, the ends of legs 87 and 88 being detachably receivable in sockets 85 and 86 respectively.

The front axles 7 (of frame sub-assembly 3) and 34 (of frame sub-assembly 4) are rotatably mounted on upright frame members 11 (of frame sub-assembly 3) and 38 (of frame sub-assembly 4) by means of sleeve portions 89 and 90, sleeve portion 89 being connected to the lower end of steering shaft 14 through a horizontally elongated aperture in tubular member 11 which permits rotation of sleeve 89 relative to tubular member 11. Steering lever arms 17 and 92 extend laterally from sleeves 89 and 90, each having upwardly projecting connecting lugs 18 and 93 respectively. The tie rod 20 having compression connectors 19 and 21 at opposite ends is connected between the steering lever arms 17 and 92, by connecting lugs 18 and 93 in connectors 19 and 21 respectively. Thus, when steering handle 15 is moved causing sleeve portion 89 of front axle 7 to rotate relative to upright member 11, such motion is transmitted through tie rod 20 to sleeve portion 90 of front axle 34 of the frame sub-assembly 4 causing it to move with front axle 7 of frame sub-assembly 3. Thus when the vehicle is assembled, the front wheels 9 and 36 of both frame assembly halves may be steered by moving steering handle 15.

A brake mechanism 96 is provided for safety, including a brake shoe 97 pivotally mounted on the upper longitudinal frame member 40 of frame sub-assembly 4, and positioned for braking contact with the tyre 98 of rear wheel 37 when pivoted to the braking position. The pivot assembly 99 on which brake shoe 97 is mounted includes a lever plate 100 having an aperture therein to receive one end of brake rod 101. The other end of brake rod 101 is pivotally secured to an end portion 102 of brake lever 103, which is pivotally mounted to a front portion of upper longitudinal frame member 40 and positioned for access by the driver of the vehicle. When the brake lever 103 is pulled rearwardly by the driver, the opposite end moves forwardly pulling the brake rod 101 forwardly. Such movement of brake rod 101 pivots the pivot assembly 99 and brake shoe 97 to the braking position, whereupon brake shoe 97 comes into frictional engagement with the tyre 98 of rear wheel 37 thereby stopping the vehicle and holding it against movement. The brake shoe 97 is released from such frictional engagement when the brake lever 103 is moved forwardly to the release position.

A seat assembly 104 is provided, including a foldable frame 105 having seat 106 and a back rest 107 pivotally mounted thereto for folding forward over the seat 106 and for pivoting backward to the back rest position. The frame 105 includes projecting side hooks 108 and 109 which hook over upper longitudinal frame members 13 (of frame sub-assembly 3) and 40 (of frame sub-assembly 4) respectively to support the rear portion of seat frame 105 in place when assembled. Brackets 110 and 111 are also provided to support the front portion of seat frame. 106, bracket 110 being secured to upper longitudinal frame member 13 (of frame sub-assembly 3) and bracket 111 being secured to upper longitudinal frame member 40 (of frame sub-assembly 4). Brackets 110 and 111 include a hook portion 112 to receive the tubular side rails 113 of the seat frame 105 when put in place on the completely assembled vehicle frame.

The electrical circuit of the vehicle in accordance with this invention is described as follows. A conductor cable 114 is connected to the negative terminal 115 of battery 57, and a second conductor cable 116 is connected to the positive terminal 117 of the battery 57.

The negative conductor cable 114 is connected to cable 118 connected to ground at the housing 119 of the motor 30.

The positive connector cable 116 is connected to the common conductor cable 120 which leads to the rotary tap switch or controller 41. The switch or controller 41 includes an operator 121, rotation of which by the driver to four positions 122, 123, 124 or 125 will cause the motor 30 to propel the vehicle forward or in reverse, and at two different speeds in each direction. In other words, the operator 121 may be rotated in one direction to a first position 122 which will propel the vehicle forward at a relatively slow speed and to a second position 123 by rotating further in the same direction which will cause the vehicle to move forward at a relatively faster speed. The operator 121 may be rotated in the opposite direction to first and second positions 124 and 125 to cause the vehicle to move in reverse at a relatively slower speed in such first position 124 at relatively faster speed in said second position 125.

Cables 126 and 127 lead from the switch or controller 41 to the resistance bank member 43.

Cables 128 and 129 lead from the switch or controller 41 to the resistance bank member 44.

Cables 126, 127, 128 and 129 are enclosed within the cable sheath 130 leading from the switch or controller 41 to the resistance bank assembly 42.

Cable 131 is connected to the armature circuit of motor 30 on the side thereof which will rotate motor 30 in the forward propelling direction, and is connected to switch or controller 41 at the terminals thereof which connect to resistance bank member 44.

Cable 132 is connected to the armature circuit of motor 30 on the side thereof which will rotate motor 30 in the reverse propelling direction, and is connected to switch or controller 41 at the terminals thereof which connect to resistance bank member 43.

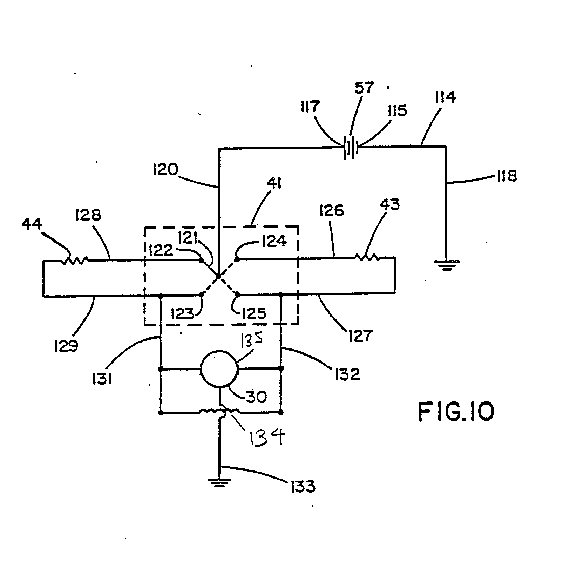

As shown in the schematic in Figure 10 of the drawing, when operator 121 is moved to position 122, current flow is through conductor resistance bank 44, conductor 129, and 131 to the armature circuit of motor 30 causing it to rotate in the forward propelling direction. The circuit is completed through the motor ground connection 133, and then through conductors 118 and 114 to the negative terminal 115 of battery 57. The switch or controller 41 is connected to the positive terminal 117 of battery 57 through conductors 116 and 120.

When operator 121 is moved to position 123, the resistance bank 44 drops out of the circuit and current flow is directly through conductor 131 to the armature circuit of the motor 30 on the forward propulsion side. When in this position, the motor 30 will rotate faster than in position 122 when resistance bank 44 is in the armature circuit. Thus, when controller 41 is in position 122 the vehicle will move forward at a relatively slow speed, and when controller 41 is in position 123 the vehicle will move forward at a relatively faster speed.

When operator 121 is rotated in the opposite direction to position 124, a current path then leads from battery 56 through conductors 116 and 120, switch 41 to conductor 126, resistance bank member 43, conductors 127 and 132 to the armature circuit of motor 30 on the side which will cause it to rotate in the opposite or reverse direction. The circuit is completed through the motor ground connection 133, and then through conductors 118 and 114 to the negative terminal of battery 57. In this position 124, the vehicle will be propelled in reverse at a relatively slow speed.

When operator 121 is moved to position 125, the resistance bank drops out of the circuit and current flow is directly through the conductor 132 to the armature circuit of motor 30 on the rearward propulsion side. When in this position, the motor 30 will rotate in the reverse direction faster than in position 124 when resistance bank 43 is in the armature circuit. Thus, when controller 41 is in position 124 the vehicle will move in reverse at a relatively slow speed, and when controller 41 is in position 125 the vehicle will move in reverse at a relatively faster speed.

The motor 30 used in this invention may be of the shunt wound D.C. type, having a field circuit 134 in parallel with the armature circuit 135.

The chassis frame assembly 2 and its sub-assemblies comprising frame sub-assembly 3 and frame sub-assembly 4 may be assembled and disassembled entirely by hand or manually without the use of tools. The wheels 9 and 10 are rotatably mounted on frame sub-assembly 3, and the wheels 36 and 37 are rotatably mounted on frame sub-assembly 4. The wheels are not removable from their respective frame assemblies without the use of appropriate tools. The wheels 9, 10, 36 and 37 are of sufficiently large diameter to enable the vehicle to move over relatively rough, unpaved surfaces such as yards, parks and fields. The diameter may for example be of the order of eighteen inches or larger. Wheels having a diameter of less than about nine inches are not satisfactory for travel over rough unpaved terrain of a self-propelled vehicle of the type described herein powered by an electric power source. Another feature of this invention is that the front wheels 9 and 10 are substantially the same diameter as the rear wheels 36 and 37.

**Claims**

1. A self-powered vehicle, including a frame assembly (2) which may be manually assembled and disassembled, a first frame sub-assembly (3), a second frame sub-assembly (4) manually connectable to and manually disconnectable from the first frame sub-assembly (3), a plurality of wheels (9, 10, 36, 37) for the vehicle, at least one of said wheels (9, 10) being part of the first frame sub-assembly (2) and at least one of the wheels (36, 37) being part of the second frame sub-assembly (4) and, lateral connecting members (22, 23, 24, 25) between the first and second sub-assemblies (3, 4), said lateral connecting members (22, 23, 24, 25) including respective first ends and second ends, characterised in that each of the lateral connecting members (22, 23, 24, 25) is pivotally and non-detachably connected at their first ends to one of the first and second frame sub-assemblies (3, 4) and rigidly and detachably connected to the other of said frame sub-assemblies (4, 3) at their second ends, including non-detachable connecting means (26, 27, 28, 29) to non-detachably connect the first ends of the lateral connecting members (22, 23, 24, 25) to the said of the first and second frame sub-assemblies (3, 4) and latch means (78, 79, 80, 81, 82) to connect and detachably lock the second ends of the lateral connecting members (22, 23, 24, 25) to the said other of the frame sub-assemblies (4, 3) whereby each of the first and second frame sub-assemblies (3, 4) are locked in fixed spaced apart relationship when so connected and prevented from· movement toward or away from each other.

2. A vehicle as claimed in claim 1, wherein the first frame sub-assembly (3) includes a front wheel (9) and a rear wheel (10) for one side of the vehicle, the second frame sub-assembly includes a front wheel (36) and a rear wheel (37) for the opposite side of the vehicle, the first end of one of said lateral connecting members between the first and second sub-assemblies (3, 4) being pivotal about a vertical axis, said first frame sub-assembly (3) lying in a plane substantially parallel to the vertical axis.

3. A vehicle as claimed in claim 2, wherein the lateral connecting members (22, 23, 24, 25) are pivotally connected at the said first end to the first frame sub-assembly (3), first connecting means (80) at the second end of the lateral cross bars connecting members (22, 23, 24, 25), corresponding second connecting means (78, 79, 81, 82) on the second frame sub-assembly (4) to receive and connect to the first connecting means (80), said first and second connecting means (78, 79, 81, 82, 80) constituting the latch means to connect and detachably lock the second ends of the lateral connecting members (22, 23, 24, 25) to the second frame sub-assembly (4) and being manually connectable and disconnectable.

4. A vehicle as claimed in claims 2 or 3, wherein the first and second frame sub-assemblies (3, 4) each includes a lower longitudinal frame member (6, 33) extending between the extended axes of the front wheel (9, 36) and the rear wheel (10, 37), the lower longitudinal frame member (6, 33) including a front end portion in facing relationship with the side of said front wheel (9, 36), an inturned portion spaced rearwardly of the axis of the front wheel (9, 36) a distance corresponding to the radius of the front wheel (9, 36) to permit free movement of the front wheel (9, 36) from planar alignment with the rear wheel (10, 37) to a position angularly disposed to the plane in which the rear wheel (10, 37) lies, pivotal connecting means (89, 90) to pivotally connect the front wheels (9, 36) to respective ones of the first and second frame sub-assemblies (34) at a point adjacent to the lower longitudinal frame member (6, 33) and in facing relationship with the sides of respective ones of the front wheels (9, 36), a first upright frame member (11, 90) extending upwardly from the lower longitudinal frame member (6, 33) near one end thereof, a second upright frame member (12, 39) extending upwardly from the lower longitudinal frame member (6, 33) at a location spaced apart from the first upright frame member (11, 90), and an upper longitudinal frame member (13, 40) extending between first and second upright frame members (11, 90; 12, 39).

5. A vehicle as claimed in claim 4, wherein a first lateral extending plate member (55) is provided including a depending flange (58), first and second slot means (62, 60) in said depending flange (58) at spaced apart locations thereon to receive the respective adjacent portions of the lower longitudinal frame members (6, 33) in the slot means (62, 60) the first and second frame sub-assemblies (3, 4) being receivable in respective ones of said first and second slot means (62, 60), locking means (63, 64) to lock the said portions of the lower longitudinal frame members (6, 33) in the slot means (62, 60) the first slot means (62) opening along the bottom edge of the depending flange (58), the second slot means (60) opening along a side edge of the depending flange (58), whereby the first plate member (55) may be held more securely against movement relative to the lower longitudinal frame members (6, 33) when locked thereon.

6. A vehicle as claimed in claim 5, wherein a second laterally extending plate member (72) is provided including third and fourth slot means (76), the second plate member (72) being mounted on the vehicle at a spaced apart location from the first plate member (56), the first upright frame members (11, 90) of the first and second frame sub-assemblies (3, 4) being received in respective ones of the third and fourth slot means (76).

7. A vehicle as claimed in claim 5 or 6, wherein a resistance bank housing (42) is provided pivotally and non-detachably mounted at one end to one of the first and second frame sub-assemblies (3, 4) and having fastening means (84) at its other end for detachable fastening to the other of the frame sub-assemblies (3, 4) when the housing is pivoted outwardly from the frame sub-assembly (3, 4) on which it is pivotally mounted during assembly of said vehicle frame assembly, the resistance bank housing (42) thereby providing increased stability and support for the vehicle frame assembly as well as a housing for electrical resistance members (43, 44) for connection to an electrical power circuit to drive the vehicle.

8. A vehicle as claimed in claim 4, wherein a seat (104) is mounted between the first and second frame sub-assemblies (3, 4) and connected to the upper longitudinal frame members (13, 40) of each of the first and second frame sub-assemblies (3, 4) the seat (104) being mounted and connected in non-support relationship to the vehicle frame assembly, being mountable and removable without increasing or decreasing the stability and support of the frame assembly.

9. A vehicle as claimed in claim 4, wherein the front wheels (9, 36) and the rear wheels (10, 37) are of a sufficiently large diameter to enable the vehicle to travel over relatively rough, unpaved surfaces, the inturned portion of the lower longitudinal members (6, 33) permitting use of relatively large steerable front wheels (9, 36).

10. A vehicle as claimed in claim 8, wherein the diameter of the wheels (9, 36; 10, 37) is in excess of eighteen inches.

11. A vehicle as claimed in claim 8, wherein the diameter of the wheels (9, 36; 10, 37) is in excess of nine inches.

12. A vehicle as claimed in any of claims 1 to 10, wherein the front wheels (9, 36) and the rear wheels (10, 37) are of substantially the same diameter.

**Revendications**

1. Un véhicule automobile, comprenant un ensemble de châssis (2) qui peut être assemblé et désassemblé manuellement, un premier sous-ensemble de châssis (3), un second sous-ensemble de châssis (4) pouvant être accouplé manuellement et désaccouplé manuellement du premier sous-ensemble de châssis (3), une pluralité de roues (9, 10, 36, 37) pour le véhicule, au moins une desdites roues (9, 10) faisant partie du premier sous-ensemble de châssis (2) et au moins une des roues (36, 37) faisant partie du second sous-ensemble de châssis (4), et des éléments de liaison latérale (22, 23, 24, 25) entre les premier et second sous-ensembles (3, 4), lesdits éléments de liaison latérale (22, 23, 24, 25) comportant respectivement des premières extrémités et des secondes extrémités, caractérisé en ce que chacun des éléments de liaison latérale (22, 23, 24, 25) est relié de façon pivotante et non séparable par les premières extrémités avec un des premier et second sous-ensembles de châssis (3, 4) et est relié rigidement et de façon séparable à l'autre desdits sous-ensembles de châssis (4, 3) par les secondes extrémités, notamment des moyens de liaison non séparables (26, 27, 28, 29) pour relier de façon non séparable les premières extrémités des éléments de liaison latérale (22, 23, 24, 25) avec lesdits premier et second sous-ensembles de châssis (3, 4) et des moyens de verrouillage (78, 79, 80, 81, 82) pour relier et bloquer de façon séparable les secondes extrémités des éléments de liaison latérale (22, 23, 24, 25) avec ledit autre sous-ensemble de châssis (4, 3) de façon que lesdits premier et second sous-ensembles de châssis (3, 4) soient bloqués dans une relation d'espacement fixe lorsqu'ils sont ainsi accouplés et soient empêchés de se rapprocher ou de s'écarter l'un de l'autre.

2. Un véhicule tel que revendiqué dans la revendication 1, dans lequel le premier sous-ensemble de châssis (3) comprend une roue avant (9) et une roue arrière (10) sur un côté du véhicule, le second sous-ensemble de châssis comprend une roue avant (36) et une roue arrière (37) sur le côté opposé du véhicule, la première extrémité d'un desdits éléments de liaison latérale entre les premier et second sous-ensembles (3, 4) pouvant pivoter autour d'un axe vertical, ledit premier sous-ensemble de châssis (3) étant situé dans un plan sensiblement parallèle à l'axe vertical.

3. Un véhicule tel que revendiqué dans la revendication 2, dans lequel les éléments de liaison latérale (22, 23, 24, 25) sont reliés de façon pivotante par ladite première extrémité avec ledit premier sous-ensemble de châssis (3), des premiers moyens de liaison (80) sont prévus à la seconde extrémité de barres transversales latérales reliant les éléments (22, 23, 24, 25), des seconds moyens de liaison correspondants (78, 79, 81, 82) sont prévus sur le second sous-ensemble de châssis (4) pour recevoir et établir l'accouplement avec les premiers moyens de liaison (80), lesdits premiers et seconds moyens de liaison (78, 79, 81, 82, 80) constituant les moyens de verrouillage servant à relier et bloquer de façon séparable les secondes extrémités des éléments de liaison latérale (22, 23, 24, 25) avec le second sous-ensemble de châssis (4) et pouvant être accouplés et désaccouplés manuellement.

4. Un véhicule tel que revendiqué dans les revendications 2 ou 3, dans lequel les premier et second sous-ensembles de châssis (3, 4) comprennent chacun un élément structural longitudinal inférieur (6, 33) s'étendant entre les axes prolongés de la roue avant (9, 36) et de la roue arrière (10, 37), l'élément structural longitudinal inférieur (6, 33) comportant une partie extrême avant qui est tournée du côté de ladite roue avant (9, 36), une partie tournée vers l'intérieur et espacée vers l'arrière de l'axe de la roue avant (9, 36) d'une distance correspondant au rayon de la roue avant (9, 36) afin de permettre un libre mouvement de la roue avant (9, 36) depuis une condition d'alignement planaire avec la roue arrière (10, 37) jusque dans une position inclinée par rapport au plan dans lequel est située la roue arrière (10, 37), des moyens de liaison pivotante (89, 90) pour relier de façon pivotante les roues avant (9, 36) avec respectivement les premier et second sous-ensemble de châssis (34) en un point adjacent à l'élément structural longitudinal inférieur (6, 33) et en étant dirigé vers les côtés des roues avant respectives (9, 36), un premier élément structural vertical (11, 90) s'étendant vers le haut à partir de l'élément structural longitudinal inférieur (6, 33) à proximité d'une extrémité de celui-ci, un second élément structural vertical (12, 39) s'étendant vers le haut à partir de l'élément structural longitudinal inférieur (6, 33) dans une position espacée du premier élément structural vertical (11, 90), et un élément structural longitudinal supérieur (13, 40) s'étendant entre les premier et second éléments structuraux verticaux (11, 90; 12, 39).

5. Un véhicule tel que revendiqué dans la revendication 4, dans lequel il est prévu un premier élément plat (55) s'étendant latéralement et comportant une aile (58) dirigée vers le bas, une première et une seconde fente (62, 60) ménagées dans ladite aile dirigée vers le bas (58) dans des positions espacées l'une de l'autre de façon à recevoir les parties adjacentes respectives des éléments structuraux longitudinaux inférieurs (6, 33) dans les fentes (62, 60), le premier et le second sous-ensemble de châssis (3, 4) pouvant être reçus dans la fente respective parmi lesdites première et seconde fentes (62, 60), des moyens de blocage (63, 64) pour bloquer lesdites parties des éléments structuraux longitudinaux inférieurs (6, 33) dans les fentes (62, 60), la première fente (62) débouchant le long du bord inférieur de l'aile (58) dirigée vers le bas, la seconde fente (60) débouchant le long d'un bord latéral de l'aile (58) dirigée vers le bas, de façon que le premier élément plat (55) puisse être maintenu plus solidement en étant empêché de se déplacer par rapport aux éléments structuraux longitudinaux inférieurs (6, 33) lorsqu'il est bloqué sur ceux-ci.

6. Un véhicule tel que revendiqué dans la revendication 5, dans lequel il est prévu un second élément plat (72) s'étendant latéralement et comprenant une troisième et une quatrième fente (76), le second élément plat (72) étant monté sur le véhicule en un endroit espacé du premier élément plat (56), les premiers éléments structuraux verticaux (11, 90) des premier et second sous-ensembles de châssis (3, 4) étant reçus dans des fentes respectives parmi les troisième et quatrième fentes (76).

7. Un véhicule tel que revendiqué dans la revendication 5 ou 6, dans lequel il est prévu un carter pour ensemble de résistances (42) qui est monté de façon pivotante et non séparable par une extrémité sur un desdits premier et second sous-ensembles de châssis (3, 4) et qui comporte à son autre extrémité un moyen de fixation (84) pour une fixation séparable sur l'autre des sous-ensembles de châssis (3, 4) lorsque le carter est déplacé par pivotement vers l'extérieur à partir du sous-ensemble de châssis (3, 4) sur lequel il est monté de façon pivotante pendant l'assemblage dudit ensemble de châssis de véhicule, le carter pour ensemble de résistances (42) conférant ainsi une stabilité accrue et un meilleur support à l'ensemble de châssis de véhicule et constituant également un carter pour des résistances électriques (43, 44) qui sont reliées à un circuit d'alimentation en courant électrique pour l'entraînement du véhicule.

8. Un véhicule tel que revendiqué dans la revendication 4, dans lequel un siège (104) est monté entre les premier et second sous-ensembles de châssis (3, 4) et est accouplé avec les éléments structuraux longitudinaux supérieurs (13, 40) de chacun desdits premier et second sous-ensembles de châssis (3, 4), le siège (104) étant monté et accouplé dans une relation non-portante avec l'ensemble de châssis de véhicule, en pouvant être monté et démonté sans augmentation ou diminution de la stabilité et du soutien de l'ensemble de châssis.

9. Un véhicule tel que revendiqué dans la revendication 4, dans lequel les roues avant (9, 36) et les roues arrière (10, 37) ont un diamètre suffisamment grand pour permettre au véhicule de se déplacer sur des surfaces relativement grossières et non revêtues, la position retournée vers l'intérieur des éléments longitudinaux inférieurs (6, 33) permettant l'utilisation de roues avant directrices (9, 36) relativement grandes.

10. Un véhicule tel que revendiqué dans la revendication 8, dans lequel le diamètre des roues (9, 36; 10, 37) est supérieur à dix-huit pouces (457 mm).

11. Un véhicule tel que revendiqué dans la revendication 8, dans lequel le diamètre des roues (9, 36; 10, 37) est supérieur à neuf pouces (229 mm).

12. Un véhicule tel que revendiqué dans une quelconque des revendications 1 à 10, dans lequel les roues avant (9, 36) et les roues arrière (10, 37) ont sensiblement le même diamètre.

**Patentansprüche**

1. Angetriebenes Fahrzeug, mit einer Rahmengruppe (2), die manuell montierbar und demontierbar ist, mit einer ersten Rahmenuntergruppe (3), mit einer zweiten Rahmenuntergruppe (4), die manuell mit der ersten Rahmenuntergruppe (3) verbunden und von dieser gelöst werden kann, mit einer Vielzahl von Rädern (9, 10, 36, 37) für das Fahrzeug, wovon wenigstens eines der Räder (9, 10) Teil der ersten Rahmenuntergruppe (2) und wenigstens eines der Räder (36, 37) Teil der zweiten Rahmenuntergruppe (4) ist, und mit seitlichen Verbindungselementen (22, 23, 24, 25) zwischen der ersten und zweiten Untergruppe (3, 4), wobei die seitlichen Verbindungselemente (22, 23, 24, 25) jeweils erste und zweite Enden aufweisen, dadurch gekennzeichnet, daß jedes der seitlichen Verbindungselemente (22, 23, 24, 25) an dessen erstem Ende schwenkbar und unlösbar mit einer der ersten und zweiten Rahmenuntergruppen (2, 3) und an dessen zweiten Ende starr und lösbar mit der anderen der Rahmenuntergruppen (4, 3) verbunden ist und nicht lösbare Verbindungsglieder (26, 27, 28, 29) zur nicht lösbaren Verbindung der ersten Enden der seitlichen Verbindungselemente (22, 23, 24, 25) mit der genannten der ersten und zweiten Rahmenuntergruppen (3, 4) sowie Verriegelungs- bzw. Einrastelemente (78, 79, 80, 81, 82) zur Verbindung und lösbaren Verriegelung der zweiten Enden der seitlichen Verbindungselemente (22, 23, 24, 25) mit der anderen der Rahmenuntergruppe (4, 3) aufweist, wobei die erste und zweite Rahmenuntergruppe (3, 4) im verbundenen Zustand in einem festen Abstandsverhältnis verriegelt sind und an einer aufeinander zuführenden Bewegung und voneinander abführenden Bewegung gehindert werden.

2. Fahrzeug nach Anspruch 1, dadurch gekennzeichnet, daß die erste Rahmenuntergruppe (3) ein Vorderrad (9) und ein Hinterrad (10) für eine Seite des Fahrzeugs aufweist, daß die zweite Rahmenuntergruppe ein Vorderrad (36) und ein Hinterrad (37) für die gegenüberliegende Seite des Fahrzeugs aufweist, daß das erste eines der seitlichen Verbindungselemente zwischen der ersten und zweiten Rahmengruppe (3, 4) um eine vertikale Achse schwenkbar ist und daß die erste Rahmenuntergruppe (3) in einer Ebene liegt, die sich im wesentlichen parallel zur vertikalen Achse erstreckt.

3. Fahrzeug nach Anspruch 2, dadurch gekennzeichnet, daß die seitlichen Verbindungselemente (22, 23, 24, 25) an dem ersten Ende schwenkbar mit der ersten Rahmenuntergruppe (3) verbunden sind, mit einem ersten Verbindungsglied (80) an dem zweiten Ende der seitlichen Querstangen-Verbindungselemente (22, 23, 24, 25) und entsprechenden zweiten Verbindungsgliedern (78, 79, 81, 82) an der zweiten Rahmenuntergruppe (4) für die Aufnahme und die Verbindung mit dem ersten Verbindungsglied (80), wobei die ersten und zweiten Verbindungsglieder (78, 79, 81, 82, 80) die Verriegelungs- bzw. Einrasteinrichtung zur Verbindung und lösbaren Verriegelung der zweiten Enden der seitlichen Verbindungselemente (22, 23, 24, 25) mit der zweiten Rahmenuntergruppe (4) bilden und manuell verbunden und gelöst werden können.

4. Fahrzeug nach einem der Ansprüche 2 oder 3, dadurch gekennzeichnet, daß die erste und zweite Rahmenuntergruppe (3, 4) jeweils ein unteres Längsrahmenteil (6, 33) aufweisen, das sich zwischen den verlängerten Achsen des Vorderrads (9, 36) und des Hinterrads (10, 37) erstreckt und einen der Seite des Vorderrads (9, 36) zugewandten vorderen Endbereich aufweist, einen nach innen gewandten Bereich, der von der Rückseite der Achse der Vorderrads (9, 36) über eine dem Radius des Vorderrads (9, 36) entsprechende Distanz beabstandet ist und so die freie Bewegung des Vorderrads (9, 36) aus der mit dem Hinterrad (10, 37) fluchtenden geraden Stellung in eine zu der Ebene, in der das Hinterrad (10, 37) liegt, winkelförmig versetzte Stellung erlaubt, schwenkbare Verbindungsglieder (89, 90) zur schwenkbaren Verbindung der Vorderräder (9, 36) mit den jeweils entsprechenden der ersten und zweiten Rahmenuntergruppe (3, 4) an einer an das untere Längsrahmenteil (6, 33) angrenzenden Stelle und in gegenüberliegender Relation mit den Seiten der entsprechenden der Vorderräder (9, 36), ein erstes hochstehendes Rahmenteil (11, 90), das sich von dem unteren Längsrahmenteil (6, 33) in der Nähe eines Endes desselben nach oben erstreckt, ein zweites hochstehendes Rahmenteil (12, 39), das sich von dem unteren Längsrahmenteil (6, 33) an einer von dem ersten hochstehenden Rahmenteil (11, 90) beabstandeten Stelle nach oben erstreckt, und eine oberes Längsrahmenteil (13, 40), das sich zwischen dem ersten und zweiten hochstehenden Rahmenteil (11, 90; 12, 39) nach oben erstreckt.

5. Fahrzeug nach Anspruch 4, gekennzeichnet, durch ein erstes sich seitlich erstreckendes Plattenteil (55) mit einem herabhängenden Flansch (58), erste und zweite Schlitze (62, 60), die an voneinander beabstandeten Stellen in dem herabhängenden Flansch (58) ausgebildet sind und die jeweils angrenzenden Bereiche der unteren Längsrahmenteile (6, 33) aufnehmen, wobei die ersten und zweiten Rahmenuntergruppen (3, 4) in den betreffenden der ersten und zweiten Schlitze (62, 60) aufnehmbar sind, und Verriegelungselemente (63, 64) zum Verriegeln der betreffenden Bereiche der unteren Längsrahmenteile (6, 33) in den Schlitzen (62, 60), wobei sich der erste Schlitz (62) entlang der Unterkante des herabhängenden Flansches (58) und der zweite Schlitz (60) entlang einer Seitenkante des herabhängenden Flansches (58) öffnet, wodurch das erste Plattenelement (55) besser gegen eine relative Bewegung zu den unteren Längsrahmenteilen (6, 33) sichern läßt, wenn es dort verriegelt ist.

6. Fahrzeug nach Anspruch 5, gekennzeichnet durch ein zweites sich seitlich erstrekendes Plattenteil (72) mit dritten und vierten Schlitzen (76), das an dem Fahrzeug an einer von dem ersten Plattenteil (56) beabstandeten Stelle montiert ist, wobei die ersten hochstehenden Rahmenteile (11, 90) der ersten und zweiten Rahmenuntergruppe (3, 4) in dem jeweils betreffenden der Schlitze (76) aufgenommen wird.

7. Fahrzeug nach Anspruch 5 oder 6, dadurch gekennzeichnet, daß ein Widerstandsbankgehäuse (42) an einem Ende schwenkbar und nicht lösbar mit einer der ersten und zweiten Rahmenuntergruppen (3, 4) verbunden ist und an dem anderen Ende Befestigungselemente (84) für die lösbare Befestigung an der anderen der Rahmenuntergruppen (3, 4) aufweist, wenn das Gehäuse während der Montage der Rahmengruppe des Fahrzeugs von der Rahmenuntergruppe (3, 4), an welcher es schwenkbar befestigt ist, nach außen geschwenkt wird, wobei das Widerstandsbankgehäuse (42) für größere Stabilität und besseren Halt der Rahmengruppe des Fahrzeugs sorgt und als Gehäuse für elektrische Widerstandselemente (43, 44) zum Anschluß an einen elektrischen Stromkreis für den Antrieb des Fahrzeugs dient.

8. Fahrzeug nach Anspruch 4, dadurch gekennzeichnet, daß zwischen den ersten und zweiten Rahmenuntergruppen (3, 4) ein Sitz (104) befestigt und mit den oberen Längsrahmenteilen (13, 40) und jeder der ersten und zweiten Rahmenuntergruppen (3, 4) verbunden ist, wobei der Sitz (104) in nicht stützender Relation zu der Rahmengruppe des Fahrzeugs montiert und verbunden ist und ohne Vergrößerung oder Verringerung der Stabilität und Stützung der Rahmengruppe montiert und demontiert werden kann.

9. Fahrzeug nach Anspruch 4, dadurch gekennzeichnet, daß die Vorderräder (9, 36) und die Hinterräder (10, 37) einen Durchmesser aufweisen, der ausreichend groß ist, um das Fahrzeug über unebenes, ungepflastertes Gelände bewegen zu können, wobei der nach innen gewandte Bereich der unteren Längsteile (6, 33) die Verwendung relativ großer lenkbarer Vorderräder (9, 36) erlaubt.

10. Fahrzeug nach Anspruch 8, dadurch gekennzeichnet, daß der Durchmesser der Räder (9, 36; 10, 37) größer ist als 45,72 cm (=18 inches).

11. Fahrzeug nach Anspruch 8, dadurch gekennzeichnet, daß der Durchmesser der Räder (9, 36; 10, 37) größer ist als 22,86 cm (=9 inches).

12. Fahrzeug nach einem der Ansprüche 1 bis 10, dadurch gekennzeichnet, daß die Vorderräder (9, 36) und die Hinterräder (10, 37) im wesentlichen gleich großen Durchmesser aufweisen.

FIG.1

FIG.2

FIG.3

FIG.5

FIG. 4

FIG.6

FIG.7

FIG.8

FIG.9

FIG.10